Europäisches Patentamt

(19) European Patent Office

Office européen des brevets

(11) Numéro de publication : **0 299 825 B1**

(12) **FASCICULE DE BREVET EUROPEEN**

(45) Date de publication du fascicule du brevet :
06.11.91 Bulletin 91/45

(21) Numéro de dépôt : **88401637.9**

(22) Date de dépôt : **27.06.88**

(51) Int. Cl.⁵ : **G01P 15/13, G01P 15/125**

(54) Accéléromètre pendulaire à rééquilibrage.

(30) Priorité : **30.06.87 FR 8709229**

(43) Date de publication de la demande :
**18.01.89 Bulletin 89/03**

(45) Mention de la délivrance du brevet :
**06.11.91 Bulletin 91/45**

(84) Etats contractants désignés :
**CH DE GB IT LI NL SE**

(56) Documents cités :
**EP-A- 0 127 500**
**GB-A- 2 096 326**
**PROCEEDINGS OF THE IEEE, vol. 70, no. 5,**
**mai 1982, pages 420-457, IEEE, New York, US;**
**K.E. PETERSEN: "Silicon as a mechanical**
**material"**

(73) Titulaire : **SOCIETE D'APPLICATIONS**
**GENERALES D'ELECTRICITE ET DE**
**MECANIQUE SAGEM**
**6, Avenue d'Iéna**
**F-75783 Paris Cédex 16 (FR)**

(72) Inventeur : **Amand, Yvon**
**24 Allée Mozart**
**F-95230 Soisy Sous Montmorency (FR)**

(74) Mandataire : **Fort, Jacques et al**
**CABINET PLASSERAUD 84, rue d'Amsterdam**
**F-75009 Paris (FR)**

**Description**

L'invention concerne les accéléromètres pendulaires à rééquilibrage électrostatique.

Elle concerne plus particulièrement les accéléromètres pendulaires du type comprenant un boîtier et un pendule plat monté de façon à pouvoir osciller par rapport au boîtier autour d'un axe de rotation situé dans le plan du pendule et dont la distance au centre de gravité est faible par rapport à l'envergure du pendule, des électrodes portées par une surface plane du pendule de part et d'autre de l'axe étant prévues pour coopérer avec des électrodes de création d'un champ électrostatique d'équilibrage portées par le boîtier.

On connaît des accéléromètres pendulaires du type ci-dessus défini (FR-A-2509471) dont le pendule est constitué par un disque ayant des faces planes conductrices sensiblement parallèles, relié au boîtier par des charnières.

L'avantage d'un pendule tournant autour d'un axe proche du centre de gravité sur un pendule constitué par un disque tournant autour d'un axe situé au bord, est que les forces électrostatiques nécessaires pour rééquilibrer le pendule sont plus faibles. Mais les tolérances de fabrication font qu'il est impossible de rendre les faces opposées du pendule rigoureusement parallèles. Ce défaut de parallélisme impose soit de donner aux entrefers entre électrodes du pendule et électrodes du boîtier une valeur relativement importante, pour éviter des écarts trop importants de distance entre les différents points en regard soit d'utiliser des technologies de fabrication complexes et coûteuses. Ces accéléromètres pendulaires à axe de pendule légèrement décentré ne constituent en conséquence pas un progrès notable par rapport aux accéléromètres antérieurs dont le pendule est un disque oscillant autour d'un bord.

L'invention vise à fournir un accéléromètre du type ci-dessus défini dans lequel l'entrefer peut être rendu très faible et qui peut cependant être fabriqué par des procédés industriels. Dans ce but, l'invention propose notamment un accéléromètre caractérisé en ce que les électrodes sont prévues sur une seule face du pendule. Le pendule, un cadre qui le porte et les charnières qui relient le pendule au cadre appartenant au boîtier sont avantageusement constitués d'une seule pièce usinée. Le cadre présente alors une face plate destinée à s'appliquer contre un fond muni des électrodes de boîtier pour constituer ce dernier. Du fait que les électrodes sont placées d'un seul côté du pendule, il n'y a pas de condition de parallélisme de faces à remplir. La masse du pendule peut être faible, car la face qui ne porte pas d'électrode peut être évidée, tout en laissant subsister la rigidité nécessaire. Deux pièces actives seulement sont nécessaires.

La distance interélectrodes pouvant être très faible (moins de 10 μm) les forces nécessaires pour réééquilibrer le pendule même lorsque l'accélération mesurée est très élevée, peuvent être obtenues avec des tensions beaucoup plus réduites que dans le cas des accéléromètres pendulaires antérieurs. A titre d'exemple, pour un intervalle interélectrodes de 6 à 8 μm, une tension de rappel de quelques dizaines de Volts suffit pour mesurer les accélérations allant jusqu'à 100 g. Par ailleurs l'existence d'un très faible entrefer réduit les chocs lorsque l'accéléromètre est soumis brutalement à une très forte accélération, pouvant par exemple atteindre 10000 g dans le cas d'un accéléromètre porté par un projectile tiré par un canon.

Du fait que les parties électromécaniques de l'accéléromètre sont réalisables sous un volume très faible, l'invention trouve une application particulièrement importante dans le domaine des accéléromètres destinés aux projectiles, qui doivent de plus avoir un coût modéré. L'accéléromètre se prête par ailleurs parfaitement à une intégration complète sur substrat semi-conducteur. Une telle intégration a déjà été proposée (FR-A-2585474) mais dans le cas d'accéléromètres, apparamment pour des applications classiques, dont le pendule porte des électrodes sur ses deux faces, ce qui conduit, pour permettre des espaces interélectrodes faibles, à une technologie très élaborée.

Le circuit d'asservissement peut avoir diverses constitutions. Il est cependant avantageux d'utiliser un circuit de type numérique, par exemple du genre décrit dans le document GB-A-2047902, à fonctionnement par cycles.

L'accéléromètre peut être fabriqué en utilisant des techniques maintenant bien maîtrisées d'usinage chimique et de dépôt sous vide, qui permettent, en utilisant des masquages, de fabriquer simultanément un grand nombre de boîtiers ou de pendules.

L'invention sera mieux comprise à la lecture de la description qui suit d'un mode particulier d'exécution de l'invention, donné à titre d'exemple non limitatif. La description se réfère aux dessins qui l'accompagnent, dans lesquels :

— la Figure 1 est un schéma synoptique comportant une coupe simplifiée de la partie électromécanique de l'accéléromètre et les principaux composants d'un circuit numérique associé ;

— la Figure 2 est une vue éclatée en perspective montrant la constitution et la disposition relatives d'une culasse appartenant au boîtier et portant des électrodes de création de champ d'équilibrage et le pendule,

— la figure 3 est un chronogramme de fonctionnement,

— la figure 4 est une vue en coupe simplifiée montrant un montage possible des composants de l'accéléromètre dans un boîtier étanche,

— la figure 5, similaire à la figure 2, montre une autre configuration du pendule, a alvéoles de profondeur identique, le balourd étant obtenu par dissymétrie des cloisons de rigidification et raideurs identiques des ailes du pendule,

— la figure 6, similaire à la figure 1, montre un mode de réalisation analogique et non plus numérique.

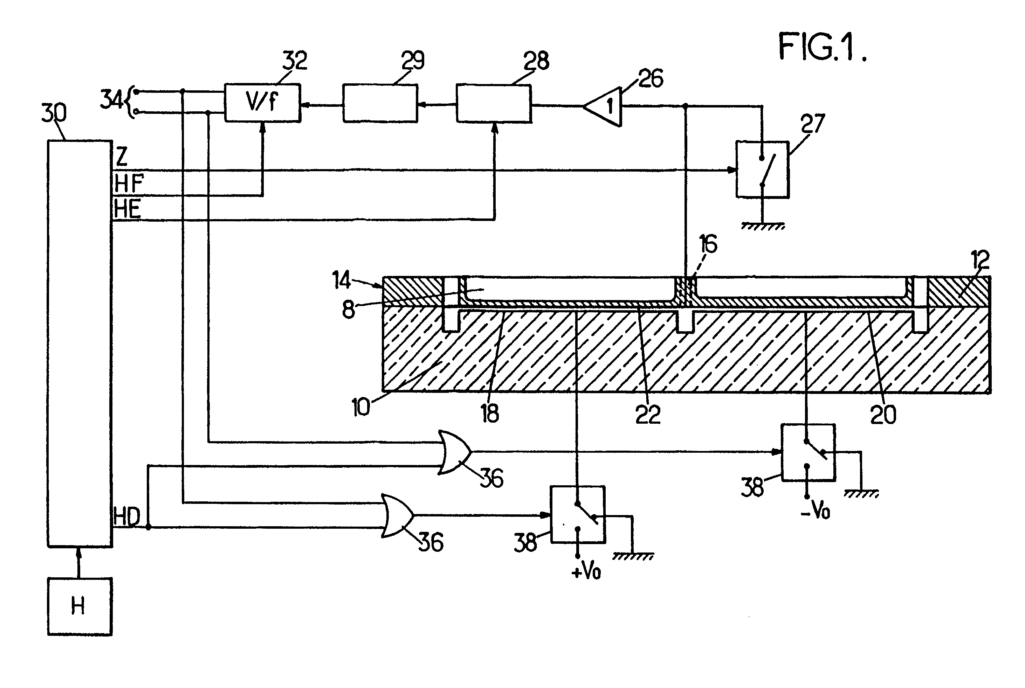

L'accéléromètre montré en Figure 1 comporte une culasse 10 et un ensemble pendulaire 14. Cet ensemble comporte un pendule 8 de forme rectangulaire, pouvant tourner par rapport à un cadre 12 autour d'un axe matérialisé par des charnières 16. Le cadre 12 est fixé à la culasse par collage, thermocompression ou liaison thermoélectrique par exemple. La culasse 10 porte deux électrodes 18 et 20 de création de champ électrostatique de rééquilibrage, reliées au circuit de mesure et d'asservissement dont il sera question plus loin.

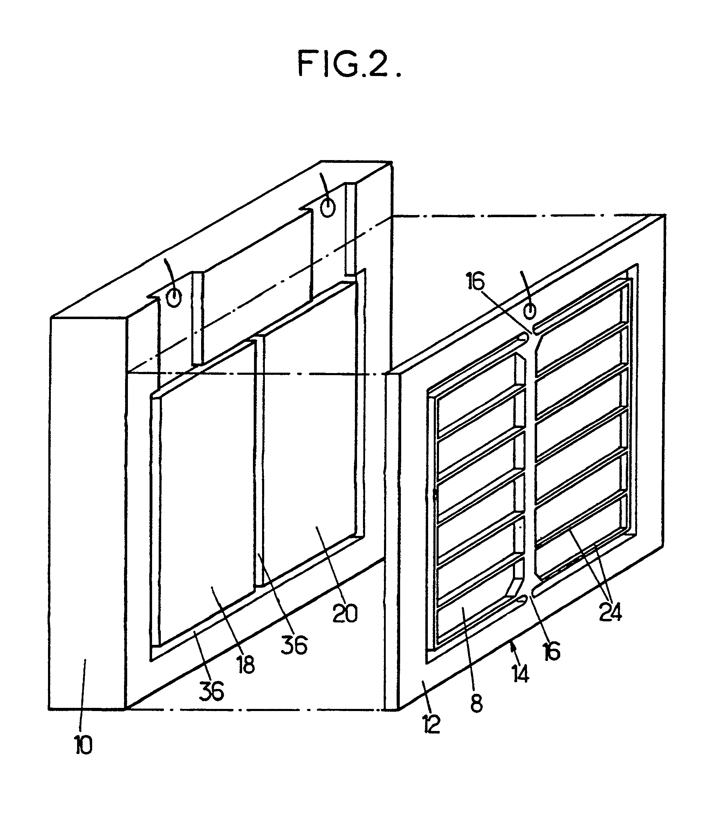

L'ensemble pendulaire 14 a avantageusement la constitution montrée en Figure 2. Le cadre et le pendule sont constitués par usinage d'une pièce massive en un matériau qui peut être conducteur, car l'ensemble du pendule est au même potentiel. On peut par exemple utiliser du silicium, éventuellement dopé pour augmenter sa conductibilité (par exemple par implantation de bore). Dans ce cas le matériau constituant la culasse sera avantageusement un verre de coefficient de dilatation thermique proche de celui du silicium. On peut réaliser l'ensemble pendulaire 14 et la culasse 10 en un même matériau tel que la silice fondue ou le quartz. Dans ce cas le pendule est rendu conducteur en surface par un dépôt mince de chrome et d'or ou d'aluminium, comme on le verra plus loin. Les charnières 16 sont constituées par des lames flexibles de faible épaisseur que l'usinage laisse subsister, dans le plan médian du pendule 8.

Le pendule présente une face plane conductrice 22, constituant électrode, située en face des électrodes 18 et 20 et à une distance de quelques μm de ces dernières. Cette distance constituant entrefer est créée par usinage, avantageusement chimique, des surfaces portant des électrodes 18 et 20 pour les mettre en retrait du plan de fixation de la culasse 10. Les électrodes sont constituées par des dépôts minces de chrome et d'or ou d'aluminium.

Le pendule présente un balourd par rapport à son axe médian défini par les charnières 16. Par ailleurs, il est avantageux de réduire le plus possible la masse du pendule tout en lui conservant sa rigidité. Ces deux objectifs sont atteints, dans le mode de réalisation montré en Figures 1 et 2, en prévoyant sur le pendule des évidements profonds séparés par des nervures 24 de rigidification disposées symétriquement par rapport à l'axe matérialisé par les charnières 16.

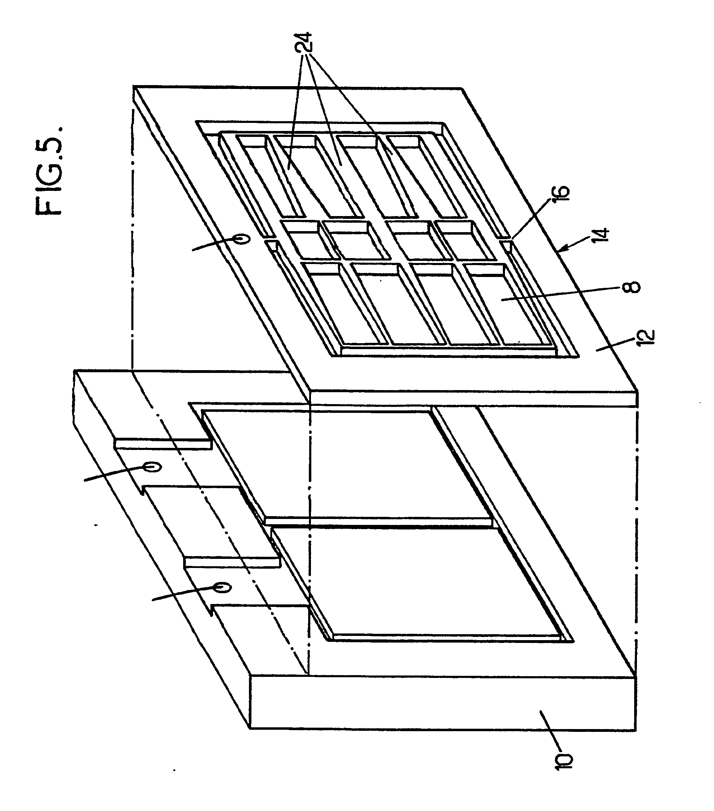

Diverses dispositions sont envisageables pour obtenir le balourd du pendule. On peut donner aux évidements des profondeurs différentes de part et d'autre de l'axe et/ou donner des largeurs différentes aux nervures comme cela est montré en figure 5. Il est important que les deux ailes du pendule aient la même raideur et le pendule sera constitué pour atteindre ce résultat.

Diverses constitutions de circuits de mesure et d'asservissement sont utilisables.

Dans le mode de réalisation montré en Figure 1, des impulsions de tension d'amplitude et de durée déterminée sont appliquées sur l'une ou l'autre des électrodes 18 et 20 pour ramener les capacités des deux condensateurs que constituent ces électrodes avec l'électrode 22 à des valeurs égales.

La force électrique de rappel exercée dans un sens déterminé est proportionnelle à la fréquence d'application de ces impulsions calibrées à un des condensateurs. Cette force de rappel équilibre la force accélérométrique, elle-même proportionnelle à l'accélération, de sorte que la fréquence d'application des impulsions est représentative de l'accélération.

La mesure s'effectue par cycles successifs, comportant chacun une période de détection et une période de rééquilibrage. Pour remplir la fonction de détection, l'électrode 22 du pendule est reliée à l'entrée d'un amplificateur suiveur 26, entrée qui est alternativement portée à la masse et séparée de la masse par un interrupteur 27 commandé par un séquenceur 30, muni d'une horloge H (à – 10 MHz par exemple), à une fréquence fixe qui pourra être comprise entre quelques kHz et quelques dizaines de kHz. L'amplificateur suiveur 26 attaque un échantillonneur bloqueur 28 commandé par une sortie $H_E$ du séquenceur 30. Le signal analogique fourni par l'échantillonneur 28 traité par un circuit correcteur 29 d'amortissement, est appliqué à un convertisseur tension-fréquence 32. Les impulsions de sortie du convertisseur tension-fréquence sont appliquées sur l'une ou l'autre de deux bornes de sortie 34, suivant le sens de l'accélération. Les électrodes 18 et 20 peuvent être respectivement portées aux tensions + $V_0$ et – $V_0$ par des circuits identiques, comprenant chacun une porte OU 36 et un interrupteur 38 commandé par la sortie de la porte OU. L'interrupteur 38 associé à l'électrode 18 permet de porter celle-ci à la tension + $V_0$ lorsque la sortie de la porte 36 correspondante est à 1, à la masse dans le cas contraire. Une entrée de chaque porte OU 36 reçoit les impulsions périodiques d'une sortie $H_D$ du séquenceur 30. L'autre interrupteur 38 permet de porter l'électrode 20 à la masse ou à la tension – $V_0$.

Les impulsions de rééquilibrage sont appliquées aux électrodes 18 ou 20 par commande de l'interrupteur correspondant 38 à travers la porte OU associée, dont la seconde entrée est reliée à une des sorties 34.

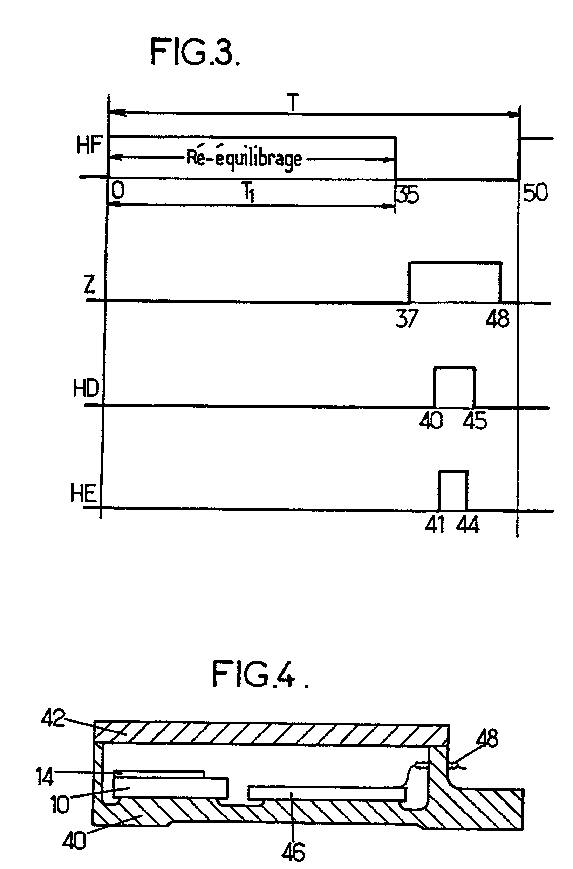

Le fonctionnement au cours d'un cycle T, qu'on supposera de 50 μs, s'effectue suivant le chronogramme de la figure 3 où les lettres portées par chaque ligne indiquent la sortie correspondante du séquencer 30 de la figure 1.

Chaque période T se décompose entre une période de rééquilibrage, au cours de laquelle il peut y avoir fermeture de l'un ou l'autre des interrupteurs 38, et une période de détection. La période de rééquilibrage est indiquée sur la figure 3 en $T_1$, du début de la période jusqu'à 35 µs.

Après la période de rééquilibrage $T_1$, la sortie Z du séquenceur 30 ouvre l'interrupteur 27, pendant un laps de temps compris entre 37 et 48 µs à partir du début du cycle dans le cas montré en figure 3. La détection proprement dite s'effectue entre 40 et 45 µs après le début du cycle, par fermeture des deux interrupteurs 38 en réponse à un signal fourni par la sortie $H_D$ de façon à porter les électrodes 18 et 20 respectivement aux tensions $+ V_0$ et $- V_0$. L'électrode 22 se trouve alors portée à une tension qui est nulle lorsque le pendule est équilibré et qui dans le cas contraire est proportionnelle à l'angle d'inclinaison du pendule, avec une polarité qui dépend du sens de cette inclinaison. Cette tension est adaptée par l'amplificateur 26 et échantillonnée en 28 lorsque la sortie $H_E$ du séquenceur 30 fournit une impulsion (impulsion allant de 41 à 44 µs dans le cas montré en figure 3). L'échantillonneur bloquer 28 mémorise la tension de déséquilibre pendant le reste du cycle. Cette tension est traitée par le réseau correcteur 29 puis appliquée au convertisseur tension/fréquence 32. Ce convertisseur reçoit en permanence des impulsions haute fréquence de la sortie HF du séquenceur 30 et les dirige (ou non) sur l'une ou l'autre des sorties 34, suivant la polarité de l'électrode 22. Ces impulsions de sortie commandent, pendant les périodes de rééquilibrage 32, la fermeture de celui des interrupteurs 38 qui permet le rééquilibrage. La fréquence moyenne des impulsions est proportionnelle à l'accélération. Une mesure analogique de cette accélération est la tension de sortie du réseau correcteur 29.

On décrira maintenant, à titre d'exemple particulier de réalisation, la fabrication d'un accéléromètre miniature permettant de mesurer des accélérations jusqu'à 100 g environ, réalisable à bas prix et sous un volume total inférieur à 2 cm³.

Le pendule 8 d'un tel accéléromètre peut avoir une épaisseur totale de 350 µm et une longueur et une largeur d'environ 6 mm.

Plusieurs culasses 10 peuvent être simultanément fabriqués à partir d'une plaque de quartz fondu ayant deux faces parallèles polies par usinage mécanique classique. Des rainures 36 destinées à délimiter les emplacements des électrodes 18 et 20 peuvent être réalisées par photolithographie avec un masque classique.

De même, plusieurs ensembles pendulaires 14 constitués chacun d'un pendule 8 et de son cadre 12 peuvent être simultanément fabriqués par photolithographie, puis par attaque chimique à travers un masque. Les culasses et les ensembles sont ensuites séparés les uns des autres puis l'entrefer, typiquement de 6 à 8 µm, est réalisé par attaque sélective à travers un masque. Dans le cas d'un pendule de 350 µm d'épaisseur, l'attaque chimique permet de réduire l'épaisseur au fond des alvéoles à quelques dizaines de µm.

Les électrodes peuvent être réalisées par pulvérisation cathodique sous vide d'une couche dont l'épaisseur est de l'ordre du dixième de µm. Les fils de jonction peuvent être raccordés par soudure thermoélectrique.

Le circuit électronique associé peut être réalisé en technologie hybride et porté sur le prolongement de la culasse, ou même intégré à cette culasse si cette dernière est en silicium oxydé superficiellement sous les électrodes 18 et 20. Cette disposition permet en particulier de placer l'amplificateur 26 à proximité immédiate des électrodes. Dans la solution montrée en figure 4, la culasse est fixée au fond d'un boîtier 40 fermé par un couvercle 42. Le circuit intégré 46 est placé à côté de la culasse et muni de fils de sortie raccordés à des broches 48 de traversée étanche.

Du fait que l'accéléromètre peut avoir un entrefer très faible, on peut adopter des tensions de rappel $+ V_0$ et $- V_0$ également faibles, de $\pm 15$ V par exemple. La mesure, s'effectuant par comptage d'impulsions, permet d'utiliser des circuits numériques miniaturisés.

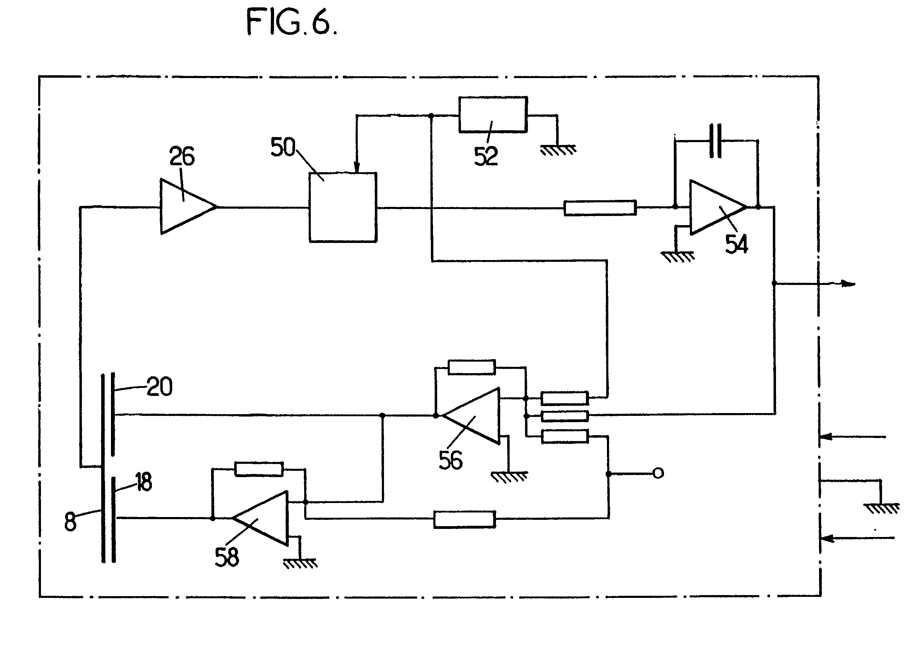

L'invention est susceptible de nombreuses variantes et en particulier on peut utiliser, au lieu du circuit qui a été décrit, d'autres montages numériques ou analogiques. La Figure 6, où les éléments correspondant à ceux de la Figure 1 sont désignés par le même numéro de référence, montre, à titre d'exemple, une réalisation analogique. Le signal de mesure amplifié est appliqué à un démodulateur synchrone 50 qui reçoit une tension sinusoïdale de référence d'un oscillateur 52, à 20 MHz par exemple. La tension continue de sortie du démodulateur 50 est appliquée à un intégrateur 54 qui fournit la tension de mesure Vsi et attaque l'amplificateur de rééquilibrage 56. Cet amplificateur opérationnel reçoit, par l'intermédiaire de résistances respectives égales, la tension Vsi, la sortie $A \sin \omega t$ de l'oscillateur 52 et une tension continue de référence $- Vref$ ($- 15$ Volts par exemple). La sortie de l'amplificateur 56, égale à :

$$+ 2Vref \pm 2Vsi - A \sin \omega t$$

est appliquée à l'une des électrodes 20. L'autre électrode 18 reçoit la sortie de 56 par l'intermédiaire d'un autre amplificateur sommateur 58 qui fournit un signal égal à :

$$+ 2\,Vref \pm 2Vsi + A \sin \omega t.$$

Un tel circuit peut encore fonctionner avec des tensions d'alimentation faibles, par exemple $+ 15$ Volts et $- 15$ Volts.

## Revendications

1. Accéléromètre pendulaire électrostatique à rééquilibrage, comprenant une culasse (10) et un pendule plat (8) monté sur la culasse de façon à pouvoir osciller autour d'un axe de rotation situé dans le plan du pendule et dont la distance au centre de gravité est faible par rapport à l'envergure du pendule, des électrodes (22) portées par une surface du pendule de part et d'autre de l'axe étant prévues pour coopérer avec des électrodes de création d'un champ électrostatique d'équilibrage (18, 20) portées par la culasse, caractérisé en ce que le pendule ne porte d'électrodes (25) que sur une seule face, en regard des électrodes (18, 20) de création du champ électrostatique.

2. Accéléromètre selon la revendication 1, caractérisé en ce que le pendule (8) est en forme de plaque symétrique par rapport à l'axe de rotation et en ce que les deux côtés de la plaque sont évidés, sur la face opposée à la face qui porte les électrodes, de façon différente.

3. Accéléromètre selon la revendication 2, caractérisé en ce que les évidements du pendule ont une profondeur différente des deux côtés de la plaque.

4. Accéléromètre selon la revendication 2 ou 3, caractérisé en ce que les évidements sont séparés par des nervures de rigidification de largeur différente des deux côtés de la plaque.

5. Accéléromètre selon l'une quelconque des revendications 1 à 4, caractérisé en ce que le pendule (8) est constitué d'une seule pièce avec un cadre (12) auquel il est relié par des charnières (16) définissant l'axe de rotation.

6. Accéléromètre selon l'une quelconque des revendications 1 à 5, caractérisé en ce que la culasse (10) est rapportée sur le cadre (12) par collage, thermocompression ou liaison thermoélectrique, la distance entre les électrodes en regard étant inférieure à 10 μm au repos.

## Patentansprüche

1. Elektrostatischer Pendelbeschleunigungsmesser mit Kraftausgleich mit einem Grundkörper (10) und einem flachen Pendel (8), das auf dem Grundkörper so angebracht ist, daß es um eine Drehachse schwingen kann, die in der Ebene des Pendels liegt und deren Abstand zum Schwerpunkt im Vergleich zur Größe des Pendels klein ist, wobei auf einer Oberfläche des Pendels zu beiden Seiten der Achse befindliche Elektroden (22) zum Zusammenwirken mit auf dem Grundkörper befindlichen Elektroden zum Erzeugen eines elektrostatischen Ausgleichsfelds (18, 20) vorgesehen sind, **dadurch gekennzeichnet, daß das Pendel Elektroden (25) nur auf einer Fläche, und zwar den Elektroden (18, 20) zum** Erzeugen des elektrostatischen Feldes gegenüberliegend, trägt.

2. Beschleunigungsmesser nach Anspruch 1, **dadurch gekennzeichnet,** daß das Pendel (8) die Form einer zur Drehachse symmetrischen Platte aufweist und daß die beiden Seiten der Platte auf der der die Elektroden tragenden Fläche gegenüberliegenden Fläche in unterschiedlicher Weise ausgehöhlt sind.

3. Beschleunigungsmesser nach Anspruch 2, **dadurch gekennzeichnet,** daß die Aushöhlungen des Pendels auf beiden Seiten der Platte eine unterschiedliche Tiefe aufweisen.

4. Beschleunigungsmesser nach Anspruch 2 oder 3, **dadurch gekennzeichnet,** daß die Aushöhlungen durch Verstärkungsrippen von auf beiden Seiten der Platte unterschiedlicher Breite getrennt sind.

5. Beschleunigungsmesser nach einem der Ansprüche 1 bis 4, **dadurch gekennzeichnet,** daß das Pendel (8) mit einem Rahmen (12), mit dem es mittels die Drehachse definierender Scharniere (16) verbunden ist, aus einem einzigen Stück gebildet ist.

6. Beschleunigungsmesser nach einem der Ansprüche 1 bis 5, **dadurch gekennzeichnet,** daß der Grundkörper (10) am Rahmen (12) mittels Klebung, Thermokompression oder thermoelektrischer Verbindung angebracht ist, wobei der Abstand zwischen den einander gegenüberliegenden Elektroden im Ruhezustand kleiner als 10 μm ist.

## Claims

1. Rebalance electrostatic pendular accelerometer, comprising a base member (10) and a flat pendulum (8) connected to the base member for oscillation about a rotation axis located in the plane of the pendulum and whose distance to the center of gravity is small as compared with the span of the pendulum, electrodes (22) carried on a surface of the pendulum on both sides of the axis being arranged for cooperating with electrodes for generating a rebalance electrostatic field (18, 20), carried by the base member, characterized in that the pendulum has electrodes (25) on one surface only, confronting the electrodes (18, 20) for generating the electrostatic field.

2. Accelerometer according to claim 1, characterized in that the pendulum (8) is shaped as a plate symmetrical with respect to the rotation axis and in that both sides of the plate are differently recessed on that surface which is opposed to the surface which carries the electrodes.

3. Accelerometer according to claim 2, characterized in that the recesses of the pendulum have a different depth on the two sides of the plate.

4. Accelerometer according to claim 2 or 3, characterized in that the recesses are separated by reinforcing ribs having different widths on the two sides of the plate.

5. Accelerometer according to any one of claims 1-4, characterized in that the pendulum (8) is integral with a frame (12) and is connected thereto by hinges (16) defining the rotation axis.

6. Accelerometer according to any one of claims 15, characterized in that the base member (10) is secured to the frame (12) by bonding, thermocompression or thermoelectric connection, the distance at rest between mutually confronting electrodes being smaller than 10 μm at rest.

FIG.1.

EP 0 299 825 B1

# FIG.2.

# FIG.3.

# FIG.4.

FIG.5.

FIG.6.